# EUROPEAN PATENT APPLICATION

(11) **EP 1 815 749 A2**
(43) Date of publication of application: **08.08.2007**
(21) Application number: 07101055.7
(22) Date of filing: 23.01.2007
(51) Int. Cl.: A23C 19/072, A23L 1/221, A23L 1/23, A23L 1/307

(54) **Reduced-fat flavor components**

(30) Priority: 23.01.2006 US 337709
(71) Applicant: KRAFT FOODS HOLDINGS, INC., Northfield, Illinois 60093 (US)
(72) Inventor: Moran, James W., Antioch, IL 60002 (US); Mehnert, David W, Lake Villa, IL 60046 (US); Galer, Chad D., Glenview, IL 60025 (US); Reeve, Jonathan L, Glenview, IL 60025 (US); Jackson, Thomas R. Jr., Chicago, IL 60649 (US); Baldwin, Cheryl J, Mundelein, IL 60060 (US); Smith, Gary F., Glenview, IL 60025 (US)
(74) Representative: Smaggasgale, Gillian Helen

(57) **Abstract**

A method is provided for producing reduced-fat components that may be used to make reduced and low-fat processed cheese, natural cheese or other reduced and low-fat food products. The reduced-fat flavor components are produced by extraction of fat from full-fat biogenerated cheese flavor components. Alternatively, natural biogenerated cheese flavor components are produced with reduced amounts of fat. Additionally, reduced-fat cheddar cheese can be derived from 1 % milk.

## Description

The present invention relates to reduced-fat flavor components, which may be used to make a reduced fat or low-fat processed cheese or natural cheese with high quality, flavor, and texture, or to add a variety of desired flavor profiles to any number of food products. More specifically, the present invention relates to reduced-fat natural biogenerated cheese flavor components, the methods for producing reduced-fat natural biogenerated cheese flavor components, 1% milk-derived cheddar cheese ingredients, and a processed cheese or natural cheese made from the reduced-fat natural biogenerated cheese flavor components or 1 % milk-derived cheddar cheese.

### BACKGROUND

There have been many efforts to produce naturally derived highly flavored cheese ingredients that can be used in process cheese. For example, U.S. Pat. No. 4,752,483 is directed to a method for producing a highly flavored cheese ingredient. In this process, cheese curd is first produced, the resulting "green" cheddar-type cheese curds are ground and then combined with a protease, a lipase, and water and incubated for about 5 to 6 days. The term '"green" cheddar-type cheese curd refers to a cheddar cheese which has been aged less than about 60 days.

U.S. Pat. No. 4,172,900 is directed to producing a natural cheese product having a highly intensified American cheese flavor which is adapted for use in the preparation of process cheese. In the method, cheese curd is produced in the usual way, wherein a coagulum is produced from milk, the coagulum is cut to produce curds and whey and the whey is drained to provide cheese curds. The curd particles are produced, mixed with salt, a source of lipolytic enzyme, and a source of a proteolytic enzyme and cured for a period of time sufficient to produce increased levels of C₂-C₁₀ fatty acids, as compared to conventional American-type cheese.

U.S. Pat. No. 4,119,732 is directed to a method for rapidly producing cheese. In this method, rennet, kid lipase, lamb lipase, and calf lipase are mixed with milk during the fermenting period. The milk is then coagulated and cut into curd particles followed by processing by the normal procedure for producing cheddar cheese, which includes a whey draining step. The curd is formed into a cheese block and the cheese block is aged for about 10 weeks to provide an intense aged cheddar cheese flavor.

U.S. Pat. No. 3,975,544 describes a method for producing cheddar cheese from pasteurized milk wherein an enzyme mixture is added to cheddared curds to substantially reduce the curing time of the cheese block. The cheese blocks are cured for a period of one month at 10 to 25°C.

U.S. Pat. No. 4,244,971 is directed to a process for the rapid manufacture of cheese products. In the process, a cultured cheese component is prepared by proteolyzing milk protein and by lipolyzing milkfat and forming a mixed fermentate of these hydrolyzed materials. The mixed fermentate is combined with a cheese starter culture and fermented to provide the cultured cheese component. The cultured cheese component is then mixed with a milk protein concentrate and a fat concentrate. This mixture is fermented to provide a cheese material capable of being made into process cheese type products by conventional cheese cooking techniques.

U.S. Pat. No. 6,251,445, owned by the same assignee as the present application, provides a method for making enzyme-modified cheese flavorings in which treatment with a proteolytic enzyme occurs prior to any heating step, and in which the enzyme treatment is relatively short (i.e., normally less than about 12 hours). The process includes the steps of: (i) contacting a dairy liquid containing whey protein with a proteolytic enzyme to provide a dairy reaction mixture; (ii) incubating the dairy reaction mixture at a temperature and for a period of time that are sufficient to partially hydrolyze proteins; (iii) pasteurizing the partially hydrolyzed dairy reaction mixture; (iv) contacting the pasteurized mixture with a composition comprising a lipase and a cheese culture and incubating for a time and at a temperature sufficient for cheese flavor to develop; and (v) treating the fermented mixture with heat sufficient to inactivate the culture, destroy microbial contaminants, and inactivate the enzymes; thereby providing the enzyme-modified cheese flavoring.

U.S. Pat. No. 6,406,724, owned by the same assignee as the present application, provides a flavoring system for food products wherein a sulfury-cheddar flavor component, a creamy-buttery flavor component, and a cheesy flavor component are separately prepared from a highly concentrated milk substrate using compositions (e.g., specific enzymes, cultures, and additives) and process conditions designed to provide the flavored components having specific flavor profiles and/or characteristics. The flavor components can be incorporated in varying amounts into process cheese, process cheese-type products, or other cheeses to produce very different cheeses with desired flavor profiles. The flavor components can also be used as a natural flavoring system in other food products.

U.S. Pat. No. 6,562,383, owned by the same assignee as the present application, describes the use of the flavor components such as described in U.S. Pat. No. 6,406,724 in a process to provide a wide variety of flavored cheeses which do not require curing or aging. The process involves forming a first concentrate mixture containing one or more flavor components selected to achieve a desired flavor profile in the flavored cheese, combining a cheese coagulant in a non-coagulating amount with the first concentrate mixture to form a second concentrate mixture, and removing moisture from the second concentrate mixture to a solids level of less than about 75 percent to form a flavored cheese that does not require curing.

U.S. Pat. App. Publication No. 2005/0112238, owned by the same assignee as the present application, describes a stabilized cheese flavoring system comprising one or more flavor components such as described above selected to achieve a desired flavor profile. The addition of a bacterocin source during at least part of the fermentation procedure used to make the flavoring system allows the cheese flavoring system to be produced with greater stability against the growth of spoilage or pathogenic microorganisms, while the flavor development can be accelerated in at least the "sulfury-cheddar" component.

Although the abave-described methods generally provide highly flavored cheese components, they are generally limited to producing full-fat flavor components. The above-described methods do not provide reduced-fat cheese flavoring components having a variety of different flavor profiles.

Known methods of producing reduced-fat cheeses involve the use of milk with less fat, such as part-skim milk or skim milk, as a starting material. Standard cheese processing techniques are thereafter used. However, when part-skim milk or skim milk is used to make cheese, the resulting cheese may have an undesirable texture and a variety of undesirable flavors. Thus, there have been many efforts aimed at producing a quality reduced fat or low-fat processed cheese products.

For example, U.S. Pat. No. 6,827,961 describes a method of fractionating or separating a cheese using heat and mixing of the cheese to separate the cheese into three phases, including a butterfat phase, an aqueous phase, and a cheese product. The resulting cheese product has at least a portion of its fat and flavor removed. The process may be used to make a low-fat cheese, a light cheese, a reduced-fat cheese, or a dairy spread, or to remove undesirable flavor components from the cheese. The process may be hastened by adding water or by using enhanced gravitational forces to effect separation of the phases.

U.S. Pat. No. 6,808,735 describes a process for making low-fat cheese that involves removing fat or butter oil from full fat cheese after the cheese is aged. The process includes the steps of shredding a full fat cheese at a low temperature, warming the cheese, removing 1-90% of the fat to generate a flavorful low-fat cheese. Additional steps may also include blending the low-fat cheese to a uniform texture, pressing the low-fat cheese into a block, and cooling.

Japan Pat. App. Publication No. Sho 46-20741 describes a method of heating natural cheese in water and thereby separating the cheese into its constituent parts including an oil and fat layer consisting of milk fat, a water layer containing the water soluble cheese ingredient, and cheese protein layer. The water layer may be mixed with a thickening agent and spray dried, thereby producing a water soluble cheese extract powder.

Japan Pat. App. Publication No. Heisei 1-196256 describes a method of processing natural cheese in a water solution of 10-36 weight % alkaline metal salt compound, heating the solution, removing the separated oil and fat portion, and thereby producing a low-fat cheese.

Thus, the above references each describe how to create a flavorful low-fat cheese starting from a full-fat cheese. However, nowhere is it described how to produce the reduced-fat flavor components of the present invention or a low-fat processed cheese or natural cheese made from the reduced-fat flavor components. It would, therefore, be desirable to provide reduced-fat natural biogenerated flavor components having varied flavor profiles, which can be used to add a variety of desired flavor profiles to any number of low-fat food products, including a low-fat processed cheese or natural cheese.

A quality low-fat processed cheese has been technically difficult to achieve. This invention reduces some key challenges with improvements in flavor and texture, as well as processing. For processed cheese in general, it has been noted that the use of natural cheese for flavor can result in insufficient flavor strength and higher costs (US Patent 5679396). When formulating a reduced-fat, low-fat or fat-free processed cheese one may use reduced-fat natural cheese. Using reduced-fat natural cheese presents an even greater challenge with flavor and additionally with texture and processing capability. This is because fat content in cheese is known to aid in delivering flavor, mouthfeel, and meltability both in the finished product and during processing (US Patent 5679396).

### SUMMARY

The present invention relates generally to methods for producing reduced-fat natural biogenerated cheese flavor components and to the reduced-fat biogenerated cheese flavor components themselves, which can be used to make low-fat processed cheese or natural cheese with high quality, flavor, and texture, or to add a variety of desired flavor profiles to any number of food products and low-fat food products. The reduced-fat cheese flavor components can be derived by extracting fat from full-fat biogenerated cheese flavor components such as disclosed in U.S. Pat. No. 6,406,724, U.S. Pat. No. 6,562,383, U.S. Pat. App. Publication No. 2005/0112238, and EP 0981965A1. Alternatively, the natural biogenerated cheese flavor components can be produced with reduced amounts of fat. These natural biogenerated cheese flavor components produced with reduced amounts of fat may be used directly or extracted to reduce fat levels further. Additionally, a reduced fat cheddar cheese can be made using 1% milk. Each these components can enable high quality reduced fat and low fat cheese products.

More specifically, a method is provided for preparing a reduced-fat cheese flavor component that includes: providing a full-fat natural biogenerated cheese flavor component; heating the full-fat natural biogenerated cheese flavor component to a temperature of at least about 120° F; separating the full-fat natural biogenerated cheese flavor component into a fat phase, a protein phase, and an aqueous phase; and removing the fat phase. The aqueous phase includes flavor components, and it may be recombined with the protein phase for use in a food product. The term "fat phase" as used herein refers to a phase that is primarily comprised of fat. The term "protein phase" as used herein refers to a phase that is primarily comprised of protein. The term "aqueous phase" as used herein refers to a phase that is primarily comprised of water and/or water soluble elements. The term "reduced-fat" as used herein refers to a cheese product or ingredient useable in a cheese or other food product that has less than the full amount of natural fat by weight. The term "full fat" as used herein refers to a cheese product or ingredient useable in a cheese or other food product that has all of its natural amount of fat by weight. The term "low fat" as used herein refers to a cheese product or ingredient useable in a cheese or other food product that has a fat content of less than 20% by weight.

The method is effective for providing a reduced-fat flavor component having a fat content of about 0.3 to about 15%, in another aspect about 0.5 to about 12%, in another aspect about 1.5 to about 8%, and in another aspect about 10 to about 14%. In an alternative aspect, up to about 0.75% surfactant may be added prior to or during heating to enhance fat separation.

The present invention also provides an alternative method for preparing a reduced-fat flavor component that includes: providing a reduced-fat milk concentrate; treating the reduced-fat milk concentrate with lactic acid cultures, flavor producing cultures such as diacetyl-producing cultures, and optionally lypolytic enzyme; adding a fermentable substrate such as a salt of an organic acid such as for example sodium citrate; fermenting the reduced-fat milk concentrate; and heating the reduced-fat milk concentrate at a temperature sufficient to inactivate the cultures and enzymes.

In another aspect, a processed cheese or natural cheese is provided that incorporates a reduced-fat flavor component prepared by one of the above methods.

### BRIEF DESCRIPTION OF THE DRAWINGS

Figure 1 is a flow chart for a process for extracting a reduced-fat cheese flavor component from a full-fat natural biogenerated cheese flavor component.

Figure 2 is a flow chart for a process of producing a reduced-fat natural biogenerated cheese flavor component.

Figure 3 illustrates the result of sensory evaluations of reduced fat flavor components.

### DETAILED DESCRIPTION

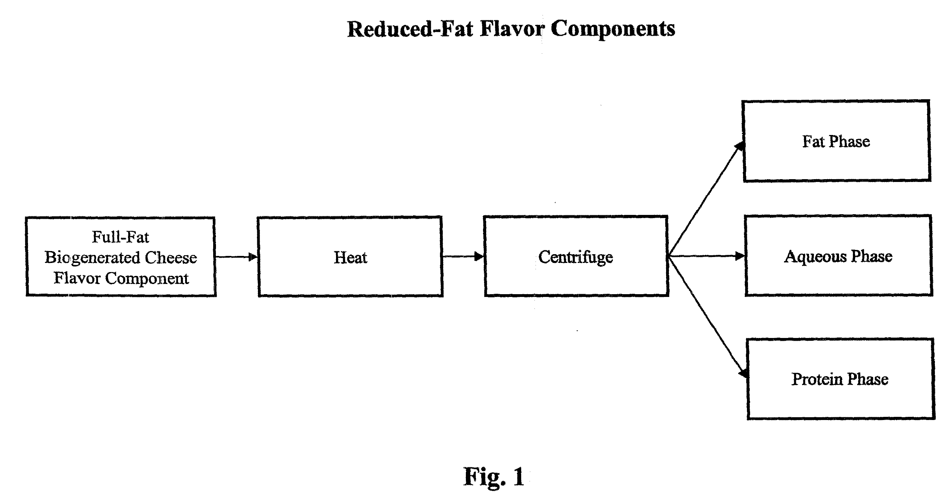

As shown in Fig. 1, one embodiment of the present invention is a process for extracting reduced-fat flavor components from a full-fat biogenerated cheese flavor component such as disclosed in U.S. Pat. No. 6,406,724, U.S. Pat. No. 6,562,383, and U.S. Pat. App. Publication No. 2005/0112238. A full-fat biogenerated cheese flavor component is heated to at least about 120° F then centrifuged so that it separates into three phases: an aqueous phase, a protein phase, and a fat phase. Heating to at least about 120°F is effective for enhancing separation of fat into the fat phase.

The aqueous phase may be collected for use as a reduced-fat cheese flavor component, because it tends to contain flavor components. Alternatively, a portion or all of the protein phase may be combined with the aqueous phase prior to use as a reduced-fat flavor component. For example, depending on the mass-fraction and the fat content of each phase, a portion or all of the protein phase may be combined with the aqueous phase add value to the finished reduced-fat flavor component without adding the fat phase or additional fat to the component.

### Natural Biogenerated Cheese Flavor Component

Used as a starting material for producing a reduced-fat cheese flavor component, the full-fat natural biogenerated cheese flavor component preferably consists of one or more of the following flavor components: a sulfury-cheddar component, a creamy-buttery component, and/or a cheesy component. There are several advantages of starting with a full-fat biogenerated cheese flavor component. For example, production schedule and inventory may be minimized by starting with only one full-fat biogenerated cheese flavor component. Moreover, it provides the added flexibility of being capable of use as-is or with fat removed in reduced-fat products.

As described in U.S. Pat. No. 6,406,724, U.S. Pat. No. 6,562,383, and U.S. Pat. App. Publication No. 2005/0112238, the entire disclosures of which are hereby incorporated by reference, the preparation of a sulfury-cheddar component may be carried out in a one or two stage process. In the first stage of a two stage process, a lactic acid culture is added to the milk substrate, and the lactic acid culture is maintained at about 70 to about 90° F for about 10 to about 24 hours to obtain a pH of about 5.4 or less. Preferably, a lipolytic enzyme and/or less preferably a protease enzyme are also added to or with the lactic acid culture in the first stage.A high proteolytic activity culture (e.g., Micrococcus proteolytic culture) can also be added with the lactic acid culture in the first stage. Then a Brevibacterium culture (preferably a *Brevibacterium linens* culture) or a yeast from the genera Debaromyces or Kluyeromyces and a sulfur-containing substrate, whereby the culture or yeast can convert the sulfur-containing substrate to organoleptically potent sulfur-containing flavor compounds is added and the fermentation continued for about 1 to 10 additional days at a temperature of about 65 to about 86° F (preferably at about 72° F). Preferably the Brevibacterium culture is used to form the sulfur-containing compounds.
There should not be any heat inactivation of enzymes/cultures between the two fermentation stages. Alternatively, in a one stage process, lactic acid cultures, enzymes, Brevibacterium culture or yeast culture, and sulfur-containing substrate may all be added together at about the same time.

The enzymes can be produced from various microorganisms or extracted from plant or animal tissues. The various enzymes of the enzyme system are available commercially as dry powders or in liquid form. Preferably, all stages are carried out in a single vessel. Preferably, the reaction mixture is subject to aeration during fermentation to prevent anaerobic conditions and to provide good mixing. Generally, conditions should be maintained to minimize phase separation during fermentation. If phase separation does occur, an optional homogenization step can be used after fermentation. After completion of the fermentation steps or stages, the cultures and enzymes are inactivated by heating to about 145 to about 190° F for about 16 seconds to about 30 minutes, preferably to about 160° F for about 16 seconds. If desired, small amounts (i.e., less than about 1 percent) of emulsifying salts (e.g., tri-sodium citrate, disodium phosphate, and the like) can be added just prior to the inactivation step to help reduce the viscosity. If batch heating is used, the reaction mixture is preferably recirculated during inactivation to improve heat transfer.

In a particular preferred embodiment, a sulfury-cheddar component is prepared by treating the milk concentrate (pH about 6.0 to about 6.7) with a lactic acid culture and a lipolytic enzyme in a first stage and then, without any inactivation, further treating with a *Brevibacterium linens* culture with added L-methionine and L-glutathione, added L-methionine and L-cysteine, or added L-methionine, L-glutathione, and L-cysteine. The first stage is carried out for about 10 to about 24 hours at a temperature of about 70 to about 90° F. The second stage is carried out for about 1 to 10 days, preferably for about 4 to about 8 days, at a temperature of about 70 to about 86° F. Although it is preferred that the two stages be carried out sequentially, they may be combined into a single fermentation step. Such a single stage fermentation process is generally carried out at about 65 to about 86° F for about 1 to about 10 days.

A creamy-buttery flavor component is prepared by adding a lactic acid culture to a milk concentrate and then fermenting the mixture at about 70 to 90° F for about 10 to about 24 hours. Preferably, a lipolytic enzyme is also added to the milk concentrate along with the lactic acid culture. A diacetyl-producing flavor culture and sodium citrate are then added and the fermentation continued at about 70 to about 90° F, preferably about 86° F, for about 1 to about 10 days, preferably about 3 to about 8 days. Alternatively, lactic acid cultures, enzymes, diacetyl-producing flavor cultures and sodium citrate may all be added together in one step. The enzymes can be produced from various microorganisms or extracted from plant or animal tissues. The various enzymes of the enzyme system are available commercially as dry powders or in liquid form. Preferably, the reaction mixture is subject to aeration during fermentation to prevent anaerobic conditions and to provide good mixing. Phase separation is not a significant problem during fermentation. After completion of the fermentation step, the cultures and enzymes are inactivated by heating to about 145 to about 190° F for about 16 seconds to about 30 minutes, preferably to about 160° F for about 16 seconds.

In a particular preferred embodiment, a creamy-buttery component is prepared by treating the milk concentrate (pH about 6.0 to about 6.7) with a lactic acid culture and a pregastric esterase in a first stage and then, without any inactivation, adding sodium citrate (generally about 0.05 to about 5 percent) and further treating with one or more cultures which have the ability to produce diacetyl from citrate. Preferred diacetyl-producing cultures include Leuconostoc and *Lactococcus lactis* ssp*. lactis* biovar. *diacetylactis.* The first stage fermentation is carried out for about 10 to about 24 hours at a temperature of about 70 to about 90° F. The second stage is carried out for about 1 to about 10 days at a temperature of about 70 to about 90° F.

Although the above described two stages may be carried out sequentially, they may be combined into a single fermentation step. Such a single stage fermentation process is generally carried out at a temperature of about 70 to 90° F for about 1 to about 10 days wherein aeration is used to control the culture activity. In such a one-stage process, the lactic acid culture, the diacetyl-producing culture, the lipase enzyme, and sodium citrate are generally added together on the first day without aeration. On the second day, sodium hydroxide may be added to keep the pH from dropping below about 5.2. Alternatively, lactic acid may be added to keep the pH from rising above 5.8. Generally, sorbic acid, if desired, may also be added on the second day at a level of about 0.1 percent. Aeration may be started on the second day and continued throughout the fermentation. After completion of the fermentation, sorbic acid, again if desired, can be added at a level of about 0.1 percent. The fermentation mixture is then heat-inactivated, placed in appropriate containers, cooled, and then stored until used. If desired, small amounts (i.e., less than about 1 percent) of emulsifying salts (e.g.,tri-sodium citrate, disodium phosphate, and the like) can be added just prior to the inactivation step to help reduce the viscosity.

The cheesy flavor component can be prepared by treating a milk concentrate with an enzyme system including a lipase, a protease, and a peptidase. The milk concentrate is treated with the enzyme system at a temperature of from about 60 to about 140° F for a period of from about 0.5 to about 10 days, preferably from about 1 to about 3 days, to reach the desired cheesy flavor level. The enzymes can be produced from various microorganisms or extracted from plant or animal tissues. The various enzymes of the enzyme system are available commercially as dry powders or in liquid form.

The desired flavor level can be judged organoleptically and can be estimated through analytical measurements, such as pH, titratable acidity, and concentration of free fatty acids and amino acids. When the target flavor is reached, the enzymes are deactivated by heating the mixture to a temperature of from about 160 to about 210° F and holding the substrate at the elevated temperature for a sufficient time to ensure complete enzyme deactivation (e.g., from about 5 to about 60 minutes). If desired, small amounts (i.e., less than about 1 percent) of emulsifying salts (e.g.,tri-sodium citrate, disodium phosphate, and the like) can be added just prior to the inactivation step to help reduce the viscosity. The cheesy component is then cooled to about 40 to about 75° F. Stabilizing agents, such as gums or proteins, may be added during or prior to cooling if desired.

The enzymes may be added sequentially or all at once to provide desired flavor profile. In the sequential addition of the enzymes, one or more of the enzymes is added and a treatment period of from about 4 hours to about 5 days is conducted. The remaining enzymes are then added and the treatment continues for further predetermined time of from about 0.5 to about 5 days. There is no inactivation step between the sequential addition of the enzymes.

In another embodiment of the invention, a first enzyme treatment takes place at a relatively high temperature of from about 120 to about 140° F. At least one of the enzymes is added and is incubated at this temperature for a first treatment of from about 2 to about 6 hours. The remaining enzymes are then added for a second treatment period of from about 6 hours to about 10 days which takes place at a temperature of from about 60 to about 140° F.

In a particular preferred embodiment, a cheesy component is prepared by treating the milk concentrate (pH about 6.0 to about 6.7) with added disodium phosphate with a neutral bacterial protease, an enzyme with aminopeptidase activity, a fungal protease, and a fungal lipase for about two days at a temperature of about 100 to about 110° F.

The flavor components can be incorporated in varying amounts to a milk substrate, which is then treated to produce a cheese with the desired flavor profile. Alternatively, the flavor components can be added to a cheese or dairy base (i.e., a cheese curd and/or dairy solids lacking the desired flavor profile) to produce the desired cheese. The flavor components can also be used as a natural flavoring system in other food products.

The fat can be removed from the full-fat biogenerated cheese flavor component using a variety of methods including, but not limited to centrifugation with or without heating, freezing, use of various chemical destabilizers, and/or membrane filtration.

### Heating

The full-fat natural biogenerated cheese flavor component may be heated using a variety of methods known to those skilled in the art for applying direct or indirect heat, for example, heated water bath, jacket-heated mixing vessel, steam-injected cooking device, or sonication.

The full-fat natural biogenerated cheese flavor component is preferably heated to a temperature of about 120-180° F, and most preferably to a temperature of about 140-165° F. Higher temperatures result in protein gelation, while lower temperatures result in less efficient fat extraction.

### Separation

The full-fat biogenerated cheese flavor component may then be separated using a variety of methods, including but not limited to, centrifugation or filtration. Separation is conducted in a manner effective for providing a visible separation into three phases. Preferably, the full-fat biogenerated cheese flavor components may be centrifuged at 8200 g for 25-30 minutes at 25-30°C.

The centrifugation after heating causes the full-fat biogenerated cheese flavor component to separate into three phases: an aqueous phase, a protein phase, and a fat phase. After separation, most of the flavor compounds remain in the aqueous phase. Accordingly, the aqueous phase may be decanted away from the protein and fat phases to produce a reduced-fat flavor component that may be used to add flavor to any number of low-fat food products.

Centrifugation, with or without surfactant, assists in the separation of the full-fat flavor component. Alternatively, the fat phase can be removed from the full-fat natural biogenerated flavor component by other methods known to those of skill in the art, for example, filtration, absorption, solvent extraction, or other methods.

Separation of the fat from the full-fat natural biogenerated cheese flavor component can be enhanced through the addition af surfactants, for example, polysorbate-60 and soy lecithin. Alternative surfactants that may be used include, but are not limited to, water and/or oil-soluble (dispersible) emulsifiers such as polyglycerol esters, sucrose esters, ethoxylated monoglycerides, polyoxyethylene sorbitan esters (i.e., polysorbates), hydroxylated lecithins, enzyme-modified lecithins, mono and diglycerides, succinylated monoglycerides, citric acid esters of monoglycerides, diacetyl tartaric acid esters of monoglycerides, lactic acid esters of monoglycerides, propylene glycol esters of monoglycerides, and phosphated monoglycerides.

The addition of at least about 0.25-0.75% surfactant to the full-fat natural biogenerated flavor component during the heating process greatly reduces the amount of fat remaining in the aqueous phase upon subsequent centrifugation.

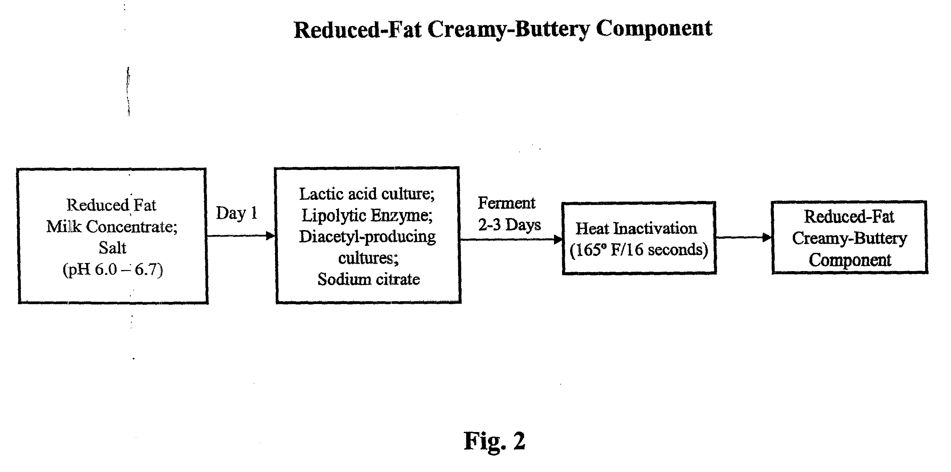

Shown in Figure 2, is an alternative embodiment of the present invention, which is a process for producing reduced-fat natural biogenerated cheese flavor components. The process may provide a reduced-fat creamy-buttery flavor component, a reduced-fat sulfury cheddar flavor component, or a reduced-fat cheesy flavor component

A reduced-fat creamy-buttery component is made from a reduced-fat milk concentrate having 20 to 40% total solids, 60 to 80% moisture, 0.1 to 15% fat, 10 to 19% protein, 0.1 to 10% lactose, and 1 to 3% salt. The preferred composition of the reduced-fat milk concentrate is 25 to 35% total solids, 65 to 75% moisture, 8 to 12% fat, 12 to 16% protein, 0.5 to 5% lactose, and 1 to 2% salt. The most preferred composition is 30% total solids, 70% moisture, 10% fat, 14% protein, 1.0 to 2.0% lactose and 1-2% salt. The reduced-fat milk concentrate can be made by concentrating whole milk or skim milk and then adding milkfat, such as cream, concentrated milk fat, and/or anhydrous milk fat, to achieve the above composition.

The reduced-fat concentrate is then treated with lactic acid cultures, diacetyl-producing cultures, lypolytic enzyme, and sodium citrate, as described in U.S. Patent Application No. 2005/0112238 which is hereby incorporated by reference. Fermentation is conducted for at a temperature of about 70° to about 90°F for about 8 to about 24 hours to allow the pH to drop. Fermentation is then conducted aerobically for 2-3 days. The reduced-fat milk concentrate is then heated at a temperature sufficient to inactivate the cultures and enzymes, forming the reduced-fat creamy-buttery component.

Any of the flavor components described herein can be incorporated in varying amounts to food products to provide desired flavors without adding significant amounts of fat. For example, the flavor components may be incorporated in a milk substrate, which is then treated to produce a cheese with the desired flavor profile. Alternatively, the flavor components can be added to a cheese or dairy base (i.e., a cheese curd and/or dairy solids lacking the desired flavor profile) to produce the desired cheese. The flavor components can also be used separately or in combination as a natural flavoring system for any number of low-fat food products, including a low-fat processed cheese or natural cheese.

The flavor components may be further processed prior to being added to the food products by, for example, spray-drying, evaporating, or freeze drying. Processed flavor components may be used as cheese powders. The processed flavor components have improved shelf-life which provides for better storage and transportation of product.

In another aspect, a reduced fat processed cheese or natural cheese is provided. In one alternative, reduced-fat flavor components may be blended with the processed or natural cheese. The processed cheese or natural cheese includes about 10 to about 75 weight percent cheese, in another aspect about 30 to about 70 weight percent cheese, and in another aspect about 50 to about 60 weight percent cheese, along with reduced-fat flavor components, and other process cheese components. The reduced-fat flavor components may be added to provide a processed cheese or natural cheese that has high quality, flavor, and texture, without significant additional fat. Additionally, the processed cheese may include other flavor components such as non-fat reduced flavor components (such as those discussed in US 6406724 & US 6562383), enzyme modified cheese, and natural and artificial flavors. The processed cheese or natural cheese can be made using typical process cheese methods of manufacture and equipment.

In another aspect, a process cheese is provided that includes a 1% milk derived cheddar cheese. 1% milk is defined as Low fat milk that has a maximum of 3 g or less total fat, with the serving size of fluid milk and milk products at 240 mL (1 cup or 8 fluid ounces) - (21 CFR § 101.62). The cheddar cheese derived from 1% milk may be produced using known methods of standardizing the vat milk to about 1% milk fat. Additionally, the finished fat content of the cheese can be adjusted using standard cheese making procedures, such as increasing the solids in the vat milk with such things as UF milk. Processed cheese is provided by blending from about about 10 to about 75 weight percent cheese, in another aspect about 30 to about 70 weight percent cheese, and in another aspect about 50 to about 60 weight percent of 1% milk derived cheddar with other processed cheese components. Reduced-fat flavor components may be added to the processed cheese. Alternatively, the processed cheese may include other flavor components such as non-fat reduced flavor components enzyme modified cheese, and natural or artificial flavors. The resulting processed cheese made with 1% milk derived cheddar cheese provides for flexible processing options and a cleaner flavor in the finished product as compared to processed cheese made with skim cheddar cheese/curd or fat-free skim cheddar cheese/curd.

The processed cheese is preferably a reduced-fat, low-fat, or fat-free processed cheese having in the range of 0-15% fat. It preferably comprises reduced-fat natural cheese, flavors, and emulsifiers. Additional preferred ingredients are milk protein and stabilizer. Other optional ingredients may include nutritional ingredients such as vitamins and minerals, preservatives, color, starch, fiber, modified protein, protein concentrates, and sugars.

The low-fat processed cheese made with the above-described flavor components has a fat content in the range of 0.8-3 grams of fat per 50 grams of product. Despite the low fat content, the low-fat processed cheese has improved flavor, i.e. flavor that is characteristic of full-fat product.

### EXAMPLES

The following examples further illustrate various features of the invention, but are not intended to limit the scope of the invention as set forth in the appended claims.
Unless otherwise noted, all percentages and ratios detailed in this specification and claims are by weight of the component, cheese or other product as noted. All references cited in the present specification are hereby incorporated by reference.

Example 1: A sample of full-fat creamy-buttery flavor component was produced as described in U.S. Patent No. 6,562,383 using a single stage fermentation process where lactic acid culture and diacetyl-producing flavor culture was added together to milk concentrate. The composition of the sample was analyzed and the results are shown below in Table 1.

Example 2: A second sample of full-fat creamy-buttery flavor component was produced as described above. The composition of the sample was analyzed and the results are shown below in Table 1.

Examples 3 and 4: A portion of the full-fat creamy-buttery flavor component described in each of the above Examples 1 and 2 was placed in a jacket-heated, agitated vessel and heated to 140° F. After heating, the samples were centrifuged at 8200 g for 30 minutes at 25°C. After centrifugation, the samples separated into three distinct phases: a fat layer on top, an aqueous layer in the middle, and a protein layer on the bottom. The fat and protein layers of each sample were removed and the composition of the aqueous layer of each was analyzed. The results are shown below in Table 1.

Example 5: A sample of reduced-fat creamy-buttery flavor component was produced by treating a reduced-fat milk concentrate with lactic acid cultures, diacetyl-producing cultures, lypolytic enzyme, and sodium citrate. It was then fermented at 86° F for about 16 hours to allow the pH to drop and then fermented aerobically for 2-3 days. The reduced-fat milk concentrate was then heated at a temperature sufficient to inactivate the cultures and enzymes, thereby forming the reduced-fat creamy-buttery component. The formula of the resulting product was 75.00% milk concentrate, 8.64% water, 7.41% cream, 6.75% anhydrous milk fat, 2.00% salt, and 0.20% sodium citrate. The composition of the resulting product was analyzed. The results are shown below in Table 1.

Table 1 outlines the composition of the full-fat and reduced-fat creamy-buttery flavor components described in Examples 1-5.

**TABLE 1**

| **Example** | **1 Full-Fat** | **2 Full-Fat** | **3 Reduced-fat** | **4 Reduced-fat** | **5 Reduced-fat** |
|---|---|---|---|---|---|
| **Culture Volatiles (PPM)** | | | | | |
| Acetoin | 2643 | 5527 | 2715 | 5327 | 4105 |
| Diacetyl | 16 | 26 | 17 | 29 | 14 |
| Ethanol | 60 | 66 | 61 | 67 | 87 |
| **Free Fatty Acids** | | | | | |
| **(PPM)** | | | | | |
| Propionic acid | <40 | <40 | <40 | <40 | <40 |
| Butyric acid | 379 | 343 | 420 | 376 | 314 |
| Hexanoic acid | 119 | 111 | 117 | 110 | 108 |
| Octanoic acid | 44 | 39 | 34 | 31 | 41 |
| Decanoic acid | 101 | 92 | 75 | 73 | 93 |
| Dodecanoic acid | 106 | 103 | 79 | 80 | 103 |
| Tetradecanoic acid | 174 | 173 | 131 | 135 174 | |
| Hexadecanoic acid | 305 | 299 | 239 | 235 | 291 |
| Octadecanoic acid | 87 | 83 | 71 | 68 | 74 |
| Oleic acid | 235 | 247 | 183 | 190 | 218 |
| Linoleic acid | 53 | 68 | 41 | 53 | 55 |
| **General Composition** | | | | | |
| Fat | 19.1% | 17.6% | 11.5% | 12.6% | 10.3% |
| Moisture | 64.4% | 66.1% | 71.4% | 70.0% | 73.0% |
| Protein | 12.6% | 11.9% | 12.5% | 12.2% | 12.7% |
| Salt | 2.0% | 2.0% | 2.1% | 2.1% | 2.2% |

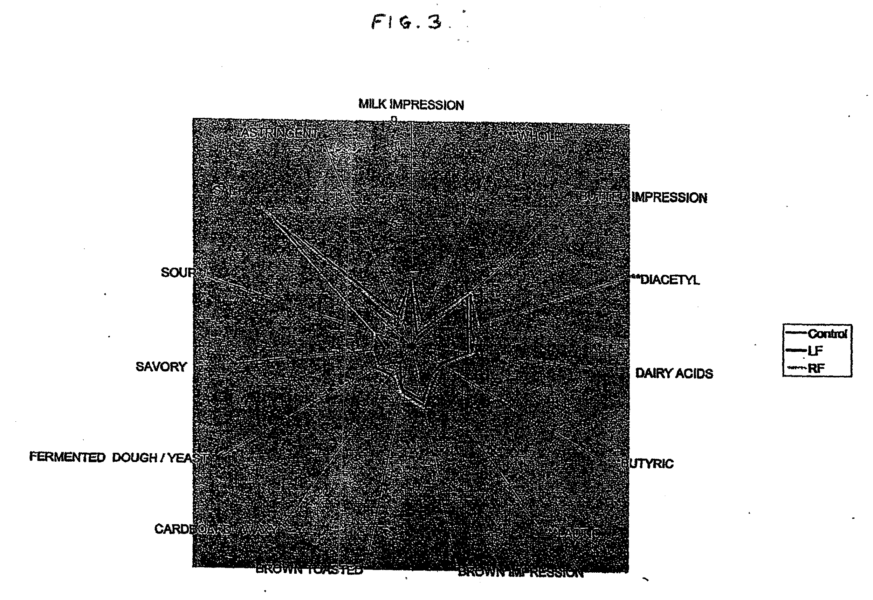

An expert sensory evaluation was performed on the samples produced in Examples 1, 3, and 5 above. Results are illustrated in Figure 3 where the Control corresponds to Example 1, LF corresponds to Example 3, and RF corresponds to Example 5. The reduced-fat flavor component produced in Example 3 by extracting the fat from the full-fat flavor component of Example 1 was similar in flavor to the full-fat flavor component of Example 1. The reduced-fat flavor component made in Example 5 was similar to the full-fat flavor component of Example 1.

Example 6: Processed cheese samples were produced using each of the different flavor components described in Examples 1-5. Each processed cheese sample contained 60% cheese, 16.8-17.7% water, 7% flavor component, 10.4-10.6% non-fat dry milk (NFDM) and whey protein, 1.6-2.3% anhydrous milk fat (AMF), 3.1 % emulsifiers and salt, 0.2% preservatives and 0.04% color.

The cheese was ground and mixed with flavor component, color, and AMF. The cheese blend was then added to a 40 lb steam injection auger cooker along with the emulsifying salts. The mixture was rapidly heated to 170° F and held at that temperature for 1 minute. The remaining ingredients were then mixed with water and added to the cooker, which caused the temperature to drop. The total mixture was then heated back to 164° F and held at that temperature for 1 1/2 minutes. It was then hot packed into plastic wraps and cooled in a ~40° F cooler overnight.

Each of the processed cheese samples were tasted by a group of process cheese experts. The process cheese experts were asked to evaluate the cheese sample on three different aspects - creamy, buttery, and cheesy. The results from this test showed that the process cheese samples with reduced-fat creamy-buttery flavor component were very similar to the process cheese samples with full-fat creamy-buttery flavor component and, in some cases, the samples with reduced-fat flavor component were even preferred.

The following examples demonstrate the effect of heating temperature on fat reduction.

Examples 6 and 7: Two batches of full-fat natural biogenerated cheese flavor component ("Samples 6 and 7") were placed in jacket-heated Hobart mixer bowls and heated for 20 minutes to 140° F, under continuous, low-speed agitation. After heating, the samples were centrifuged at 8200 g for 30 minutes at 25°C. After centrifugation, the samples had split into three distinct layers (i.e., fat, aqueous, and protein layers). The aqueous layer from each sample was removed and analyzed. The compositions of both the original sample and the extracted aqueous layers are shown in Table 2.

Examples 8 and 9: Two batches of full-fat natural biogenerated cheese flavor component ("Samples 8 and 9") were placed in five-pound, steam-injected batch cookers and heated for 3-5 minutes to a temperature of 140° F under continuous agitation. After heating, the samples were centrifuged at 8200 g for 30 minutes at 25°C. After centrifugation, the samples had split into three distinct layers (i.e., fat, aqueous, and protein layers). The aqueous layer from each sample was removed and analyzed. The compositions of both the original samples and the extracted aqueous layers are shown in Table 2.

Examples 10 and 11: Two batches of full-fat natural biogenerated cheese flavor component ("Samples 10 and 11") were placed in five-pound batch cookers and heated for 3-5 minutes to a temperature of 180° F under continuous agitation. The samples got much thicker at higher temperatures, above 165° F. After heating, the samples were centrifuged at 8200 g for 30 minutes at 25°C. After centrifugation, each sample contained a slight fat layer on the top of an aqueous layer, on top of a thick protein layer. The aqueous layer from each sample was removed and analyzed. The compositions of both the original samples and the extracted aqueous layers are shown in Table 2.

**TABLE 2**

| **Example** | | **6** | **7** | **8** | **9** | **10** | **11** |
|---|---|---|---|---|---|---|---|
| Separation Temp (°F) | | 140 | 140 | 140 | 140 | 180 | 180 |
| Heating Method | | Indirect | Indirect | Direct | Direct | Direct | Direct |

| **Composition (Original Sample)** | | | | | | | |
|---|---|---|---|---|---|---|---|
| | Fat(%) | 18.14 | 18.28 | 18.14 | 18.28 | 18.14 | 18.28 |
| | Moisture (%) | 65.8 | 65.1 | 65.8 | 65.1 | 65.8 | 65.1 |
| | Protein (%) | 11.4 | 11.6 | 11.4 | 11.6 | 11.4 | 11.6 |
| | Fat on Dry Basis (FDB) (%) | 53.0 | 52.4 | 53.0 | 52.4 | 53.0 | 52.4 |

| **Composition (Extracted Aqueous Layer)** | | | | | | | |
|---|---|---|---|---|---|---|---|
| | Fat (%) | 11.5 | 8.42 | 10.77 | 6.60 | 0.44 | 0.31 |
| | Moisture (%) | 70.7 | 75.5 | 75.0 | 80.3 | 93..3 | 94.1 |
| | Protein (%) | 11.9 | 10.5 | 9.4 | 8.4 | 1.9 | 1.6 |
| | Fat on Dry Basis (FDB)(%) | 39.2 | 34.4 | 43.1 | 33.5 | 6.6 | 5.3 |
| **FDB Reduction (%)** | | 26.0 | 34.4 | 18.8 | 36.0 | 87.6 | 90.0 |

Based on the above examples, if was observed that increasing the separation temperature generally led to an increase in fat reduction. However, it was observed that higher temperatures led to the denaturation of protein, which resulted in the sample becoming more viscous and more difficult to work with. Hence, a separation temperature of about 140-165° F is preferably used to achieve both good fat reduction levels and good sample characteristics.

The following examples demonstrate the effect of the addition of various amounts of surfactant on fat reduction.

Examples 12-15: A sample of full-fat creamy-buttery flavor component was produced as described above in Example 1. The sample contained 18.6% fat, 64.9% moisture, 11.7% protein and 2.3% salt. This sample was placed into four separate bottles each with a different amount of polysorbate-60 surfactant (i.e., 0%, 0.25%, 0.5% and 0.75%). The four bottles were placed in a water bath and heated to a final temperature of 140° F. After heating, the samples were centrifuged at 8200 g for 30 minutes at 25°C. After centrifugation, the samples had split into three distinct layers (i.e., fat, aqueous, and protein layers). The aqueous layer from each sample was removed and analyzed. The amount of fat in the original samples and the extracted aqueous layers are shown in Table 3.

| **TABLE 3** | | | | |
|---|---|---|---|---|
| **Example** | **12** | **13** | **14** | **15** |
| Surfactant (%) | 0.00 | 0.25 | 0.50 | 0.75 |
| **Fat (%) (Original Sample)** | 18.6 | 18.6 | 18.6 | 18.6 |
| **Fat (%) (Extracted Aqueous Layer)** | 8.08 | 6.94 | 3.71 | 1.83 |

As can be observed by the above examples, the extracted aqueous phase had significantly less fat than the starting creamy-buttery component. Moreover, increasing the amount of surfactant generally led to a greater increase in fat reduction.

Example 16: To demonstrate the flavor contribution of the reduced-fat flavor component, a reduced-fat process cheese slice was formulated with a base formula of 51% reduced-fat natural cheddar cheese (1% milk-derived cheddar cheese), 27.4% water, 11.8% whey and milk protein, 3.5% flavors, 3.5% emulsifiers and salt, 1.5% nutrients, 1.15% stabilizers and preservatives, and 0.05% color. The product was made in a pilot plant using a laydown cooker and packaged into single wrapped slices.

The flavors in the control product were standard flavor components (i.e. full-fat) and the flavors in the test product were reduced-fat flavor components, produced as described in Example 5. The reduced-fat flavor components replaced the standard flavor component in a 1:1 ratio. The final fat content of the product was reduced as a result. The slices were tested by a group of process cheese experts. It was observed that when the reduced-fat flavor component replaced the standard flavor system in a 1:1 ratio, the finished products were comparable in flavor to the standard flavor system even though the fat level was less.

When fat is reduced, one would expect flavor impact to also be reduced in the ingredient. Thus, the reduced-fat flavor component of the present invention surprisingly delivered comparable flavor to the standard flavor system, yet with half the fat content.

Example 17: To demonstrate the superiority of the reduced-fat flavor system, the test product described in Example 16 was made with 7.5% flavors, with the reduced-fat flavor component comprising the majority of the flavor components. Whey and milk protein were adjusted to allow for this addition. This was compared to the control product of Example 16. The total fat content of both the control product and the test product was the same. A trained sensory panel found that the 7.5% flavor sample had stronger dairy and buttery flavors. Therefore, the reduced-fat flavor component provides a superior product because it can be used at higher levels, due to its lower total fat contribution.

## Claims

1. A method for preparing a reduced-fat flavor component comprising:
providing a full-fat natural biogenerated cheese flavor component;
heating the full-fat natural biogenerated cheese flavor component to a temperature of at least about 120°F;
separating the full-fat natural biogenerated cheese flavor component into a fat phase, a protein phase, and an aqueous phase; and
removing the fat phase to provide the reduced-fat flavor component.

2. The method of Claim 1 wherein the full-fat natural biogenerated cheese flavor component is selected from the group consisting of a sulfury-cheddar flavor component, a creamy-buttery flavor component, a cheesy flavor component, and mixtures thereof.

3. The method of Claim 1 or 2 wherein the step of heating comprises heating the full-fat natural biogenerated cheese flavor component prior to a temperature of about 140-165°F.

4. The method of any one of Claims 1 to 3 further comprising adding surfactant to the full-fat natural biogenerated cheese flavor component prior to heating.

5. The method of Claim 4 wherein the surfactant is added to the full-fat natural biogenerated cheese flavor component in a weight ratio of up to about 0.75%.

6. The method of any one of Claims 1 to 5 wherein the step of separating comprises centrifuging the full-fat natural biogenerated cheese flavor component.

7. The method of any one of Claims 1 to 6 wherein the reduced-fat flavor component has a fat content of about 0.3 to about 15%.

8. A reduced-fat flavor component produced according to the method of any one of Claims 1 to 7.

9. The reduced-fat flavor component of Claim 8 having a fat content in the range of about 0.3 to about 15%.

10. A method for preparing a reduced-fat flavor component system comprising:
providing reduced-fat milk concentrate;
treating the reduced-fat milk concentrate with lactic acid cultures, and diacetyl-producing cultures;
adding salt of an organic acid;
fermenting the reduced-fat milk concentrate; and
heating the reduced-fat milk concentrate at a temperature sufficient to inactivate the cultures.

11. The method of Claim 10 wherein the salt of an organic acid is sodium citrate.

12. The method of Claim 10 or 1 wherein the method further comprises adding lipolytic enzymes.

13. A processed cheese or a natural cheese comprising a reduced-fat flavor component prepared according to anyone of Claims 1 to 12.

14. The processed cheese or natural cheese of Claim 13 wherein the cheese has a fat content of about 0.8 to about 3 grams of fat per 50 grams of cheese.

15. A processed cheese comprising from about 10 to about 75 weight percent of a 1% milk derived cheddar cheese.

16. The processed cheese of Claim 15 further comprising a reduced-fat flavor component prepared according to any one of Claims 1 to 12.

17. The processed cheese of Claim 15 or 16 further comprising additional flavor components.

18. The processed cheese of Claim 17 wherein the flavor components are selected from the groups consisting of enzymes modified cheese, natural flavor, and mixtures thereof.
